# EUROPÄISCHE PATENTSCHRIFT

(11) **EP 2 573 929 B1**
(45) Veröffentlichungstag und Bekanntmachung des Hinweises auf die Patenterteilung: **10.07.2019**
(21) Anmeldenummer: 12151414.5
(22) Anmeldetag: 17.01.2012
(51) Int. Cl.: H02M 7/5387, H02M 1/32

(54) **Steuerung zum Betreiben eines Umrichters für eine elektrische Maschine**
Control for operating a converter for an electric machine
Commande de fonctionnement d'un convertisseur pour une machine électrique

(30) Priorität: 11.07.2011 US 201161506401 P
(43) Veröffentlichungstag der Anmeldung: 27.03.2013
(73) Patentinhaber: MAGNA Powertrain GmbH & Co KG, 8502 Lannach (AT)
(72) Erfinder: Feichtinger, Thomas, 2700 Wiener Neustadt (AT); Paul, Wolfgang, 2344 Maria Enzersdorf (AT); Spindelberger, Christian, 3003 Gablitz (AT); Tannheimer, Jürgen, 2560 Berndorf (AT)
(74) Vertreter: Zangger, Bernd

(56) Entgegenhaltungen:
- DE-A1-102009 047 616
- US-A- 6 121 736
- US-A- 6 153 993

## Beschreibung

Die Erfindung betrifft eine Steuerung für einen Umrichter für eine elektrische Maschine, wobei der Umrichter mehrere Phasenleitungen zum Anschluss der elektrischen Maschine umfasst, wobei der Umrichter je Phasenleitung eine Halbbrücke mit je einem ersten und je einem zweiten Halbleiterschalter aufweist, wobei der erste Halbleiterschalter dazu vorbereitet ist, zumindest eine der Phasenleitungen zeitweise mit einer ersten Versorgungsleitung des Umrichters elektrisch zu verbinden und der zweite Halbleiterschalter dazu vorbereitet ist, die Phasenleitung zeitweise mit einer zweiten Versorgungsleitung des Umrichters elektrisch zu verbinden. Die erste Versorgungsleitung kann eine Plusversorgungsleitung des Umrichters sein, die dazu vorbereitet ist, mit einem Pluspol einer Spannungsquelle verbunden zu werden; wobei die zweite Versorgungsleitung eine Minusversorgungsleitung des Umrichters ist, die dazu vorbereitet ist, mit einem Minuspol einer Spannungsquelle verbunden zu werden. Alternativ kann die erste Versorgungsleitung eine Minusversorgungsleitung des Umrichters sein, die dazu vorbereitet ist, mit einem Minuspol einer Spannungsquelle verbunden zu werden; wobei die zweite Versorgungsleitung eine Plusversorgungsleitung des Umrichters ist, die dazu vorbereitet ist, mit einem Pluspol einer Spannungsquelle verbunden zu werden. Die elektrische Maschine kann ein Elektromotor, ein Elektrogenerator oder ein Motorgenerator sein, der zwecks Energierückgewinnung unter anderem auch dazu vorgesehen ist, mechanische Energie in elektrische Energie umzuwandeln. Die Anzahl der Phasenleitungen kann beispielsweise 2, 3, 4 oder 5 betragen oder eine andere natürliche Zahl größer 1 sein. Die Halbleiterschalter können beispielsweise Thyristoren oder Transistoren, insbesondere IGBT oder Leistungs-MOSFET sein. Typischerweise ist jedem der Halbleiterschalter eine Freilaufdiode parallelgeschaltet. Eine bevorzugte Weiterbildung sieht für den Umrichter einen Normalbetriebsmodus vor, in dem eine erwünschte Rückgewinnung (Rekuperation) von Bremsenergie in die Gleichspannungsquelle erfolgt.

Die US 6 153 993 A offenbart eine Anordnung mit einem Umrichter. Die Methode, welche in dieser Druckschrift offenbart ist, ermöglicht es verschiedene Fehlersituationen eines DC Motors genauer zu detektieren.

Die DE 298 13 080 U1 beschreibt eine Anordnung mit einem Umrichter, einer Schutzeinrichtung und einem permanenterregten Motor. Die Schutzrichtung ist dazu vorgesehen, eine Zerstörung des Umrichters infolge eines Umformatierens von Zwischenkreiskondensatoren und infolge eines Überschreitens von Sperrspannungen der Stromrichterventile zu vermeiden. Die Schutzeinrichtung ist zwischen dem Motor und dem Umrichter an die Motorphasen geschaltet. Die Schutzeinrichtung umfasst ein Mittel zur Bildung eines Signals zum Signalisieren eines Vorliegens einer schädlichen Spannungsrückwirkung und ein Mittel zum Kurzschluss einer Klemmspannung des Motors, wobei ein Durchlasswiderstand des Kurzschlussmittels als Bremslast wirkt. Die Schutzeinrichtung kann auch folgenden dort nicht erwähnten Anwendungsvorteil haben: Wenn bei einer elektrischen Synchronmaschine (beispielsweise einer permanenterregten elektrischen Maschine) die Phasen zueinander kurzgeschlossen werden, ist das im Motor erzeugte Drehmoment nur bei sehr kleinen Motordrehzahlen hoch. Oberhalb dieser sehr kleinen Motordrehzahlen ist das im Motor erzeugte Drehmoment im Kurzschlussfall erheblich kleiner als bei Betrieb des Motors mit einer ohmschen Last.

Nun wird zunächst dieses Verhalten von Synchronmaschinen technisch begründet, um das Verständnis für die Ausführbarkeit und das Wirkungsprinzip der vorliegenden Erfindung zu fördern. Der einzige ohmsche Widerstand, der sich bei einem Kurzschluss der Phasen noch im Stromkreis befindet, ist der ohmsche Wicklungswiderstand. Für die Synchronmaschine als Spannungsquelle stellt ihre Synchronreaktanz den Innenwiderstand dieser Spannungsquelle dar. Da die Synchronreaktanz der elektrischen Maschine proportional zur Drehzahl ist (siehe Wippich, K.: Elektrische Maschinen und Antriebe II, Vorlesung an der FH Oldenburg, Seite 150), überwiegt der Spannungsabfall an der Synchronreaktanz den Spannungsabfall am ohmschen Wicklungswiderstand mit zunehmender Drehzahl immer mehr. Diese Fehlanpassung zwischen dem Innenwiderstand (der Synchronreaktanz) der Synchronmaschine als Spannungsquelle und dem Widerstand des Verbrauchers (dem Wicklungswiderstand) schwächt im Kurzschlussfall eine Energieübertragung von der Antriebswelle in den ohmschen Widerstand stark. Zusätzlich wird im Kurzschlussfall die Energieübertragung zwischen Antriebswelle und ohmschem Widerstand dadurch verringert, dass die Ankerrückwirkung im Kurzschlussfall verhältnismäßig groß ist (vergleiche Wippich a. a. O.).

Die vorliegende Erfindung nutzt diese Drehmomentschwächungseffekte bei Kurzschluss der Synchronmaschine, um ein unerwünschtes, sicherheitskritisches Drehmoment (Rekuperationsmoment) zu verringern, das bei einer unerwünschten Energierückgewinnung auftritt. Abgesehen davon, dass eine Verringerung eines Drehmoments nicht das erklärte Ziel der in DE 298 13 080 U1 vorgeschlagenen Maßnahme (die Phasen zueinander kurzzuschließen) ist, sind der Herstellungsaufwand und der Raumbedarf für die Schutzeinrichtung, welche dafür in DE 298 13 080 U1 vorgeschlagen wird, erheblich.

Die vorliegende Erfindung hat das Ziel, zur Vermeidung eines unerwünschten, sicherheitskritischen Drehmoments eine Anordnung mit einer entsprechenden Schutzwirkung bereitzustellen, die kostengünstiger herstellbar ist als die bekannte Anordnung.

Diese Aufgabe wird mit dem unabhängigen Patentanspruch 1 gelöst. Vorteilhafte Weiterbildungen des Erfindungsgedankens sind Gegenstand des Unteranspruchs 2.

Erfindungsgemäß ist der bekannte Umrichter dadurch weitergebildet, dass der Umrichter dazu vorbereitet ist, zeitweise in einem ersten Energierückgewinnungsbegrenzungsmodus betrieben zu werden, in dem zumindest zeitweise mindestens zwei der ersten Halbleiterschalter gleichzeitig leitend geschaltet sind. Hierdurch kann die Schutzfunktion in den Umrichter integriert werden und zusätzlicher Herstellungsaufwand und Raumbedarf für die Schutzeinrichtung eingespart werden. Vorzugsweise werden in dem ersten Energierückgewinnungsbegrenzungsmodus alle ersten Halbleiterschalter leitend geschaltet und auf diese Weise alle Phasenleitungen zueinander kurzgeschlossen. Aufgrund des Kurzschlusses überwiegt bei nicht zu niedrigen Drehzahlen die Synchronreaktanz den ohmschen Widerstand, wobei der ohmsche Widerstand im Wesentlichen aus einer Serienschaltung des ohmschen Wicklungswiderstands und des ohmschen Widerstands der Emitter-Kollektor-Strecke bzw. Source-Drain-Strecke des leitend geschalteten Halbleiters besteht. Durch diese mittels Kurzschluss vorsätzlich herbeigeführte Fehlanpassung zwischen Synchronreaktanz und dem ohmschen Widerstand wird eine Energieübertragung zwischen der Antriebswelle und den im Kurzschlussfall im Stromkreis der jeweiligen Phase verbliebenen ohmschen Widerstände stark verringert. Aus der bekannten Beziehung M = P / 2πf folgt, dass mit dieser Verringerung der Energieübertragung auch eine starke Verringerung der sicherheitsgefährdenden Drehmomentänderung dM/dt beim Außerbetriebnehmen des Umrichters erreicht werden kann (M := Drehmoment; P := Energieübertragung pro Zeiteinheit; f := Drehzahl der Antriebswelle).

Der Umrichter ist dazu vorbereitet, zumindest zeitweise in dem ersten Energierückgewinnungsbegrenzungsmodus mit gesperrt geschalteten zweiten Halbleiterschaltern betrieben zu werden. Hierdurch kann in dem ersten Energierückgewinnungsbegrenzungsmodus ein Kurzschluss zwischen der ersten und der zweiten Versorgungsleitung vermieden werden.

Der Umrichter ist dazu vorbereitet, zumindest zeitweise in einem zweiten Energierückgewinnungsbegrenzungsmodus betrieben zu werden, in dem zumindest zeitweise mindestens zwei der zweiten Halbleiterschalter gleichzeitig leitend geschaltet sind. Vorzugsweise werden in dem zweiten Energierückgewinnungsbegrenzungsmodus alle zweiten Halbleiterschalter leitend geschaltet und somit alle Phasenleitungen zueinander kurzgeschlossen. Um einen Kurzschluss zwischen der ersten und der zweiten Versorgungsleitung zu vermeiden, kann ein Leitend-Schalten der zweiten Halbleiterschalter anstelle eines Leitend-Schaltens der ersten Halbleiterschalter dann von Vorteil sein, wenn einer der zweiten Halbleiterschalter einen Kurzschluss aufweist.

Der Umrichter ist dazu vorbereitet, zumindest zeitweise in dem zweiten Energierückgewinnungsbegrenzungsmodus mit gesperrt geschalteten ersten Halbleiterschaltern betrieben zu werden. Hierdurch kann in dem zweiten Energierückgewinnungsbegrenzungsmodus ein Kurzschluss zwischen der ersten und der zweiten Versorgungsleitung vermieden werden.

Der Umrichter kann dazu vorbereitet sein, den ersten oder den zweiten Energierückgewinnungsbegrenzungsmodus einzunehmen, wenn mindestens eine Steuerung des Umrichters inaktiv ist, insbesondere wenn mindestens zwei Steuerungen des Umrichters inaktiv sind. Hierdurch ist eine selbstsichere Nutzung des Umrichters möglich, die auch dann ein ungewolltes Rekuperationsmoment verringert, wenn die Steuerung des Umrichters gar nicht oder zumindest teilweise nicht voll funktionsfähig ist (beispielsweise weil eine Versorgungsspannung für die Steuerung ausgefallen ist).

Erfindungsgemäß ist die bekannte Steuerung dadurch weitergebildet, dass die Steuerung dazu vorbereitet ist, bei einer Fehlfunktion des Umrichters den ersten oder den zweiten Energierückgewinnungsbegrenzungsmodus einzuleiten. Hierdurch kann das Rekuperationsmoment in Abhängigkeit von einer komplexen Bewertung des Betriebszustands verringert werden, wobei die Bewertung von der Umrichtersteuerung durchgeführt wird.

Die Steuerung kann dazu vorbereitet sein, den ersten Energierückgewinnungsbegrenzungsmodus einzuleiten, wenn einer der ersten Halbleiterschalter nicht mehr sperrend geschaltet werden kann und/oder die Steuerung kann dazu vorbereitet sein, den zweiten Energierückgewinnungsbegrenzungsmodus einzuleiten, wenn einer der zweiten Halbleiterschalter nicht mehr sperrend geschaltet werden kann. Hierdurch kann ein Kurzschluss zwischen den beiden Versorgungsleitungen vermieden werden, indem ein Energierückgewinnungsbegrenzungsmodus ausgewählt wird, der zu dem Ort des Halbleiterschalters passt, der nicht mehr sperrend geschaltet werden kann.

Die Steuerung kann dazu vorbereitet sein, den ersten Energierückgewinnungsbegrenzungsmodus einzuleiten, wenn einer der zweiten Halbleiterschalter nicht mehr leitend geschaltet werden kann und/oder die Steuerung kann dazu vorbereitet sein, den zweiten Energierückgewinnungsbegrenzungsmodus einzuleiten, wenn einer der ersten Halbleiterschalter nicht mehr leitend geschaltet werden kann. Hierdurch kann ein Kurzschluss zwischen den beiden Versorgungsleitungen vermieden werden, indem ein Energierückgewinnungsbegrenzungsmodus ausgewählt wird, der zu dem Ort des Halbleiterschalters passt, der nicht mehr leitend geschaltet werden kann.

Die Steuerung kann dazu vorbereitet sein, den ersten Energierückgewinnungsbegrenzungsmodus in Abhängigkeit von einer Drehzahlinformation, einer Drehmomentinformation, einer Frequenzinformation, einer Temperaturinformation, einer Leistungsinformation, einer Verlustleistungsinformation oder einem anderen Zustandsparameter zu aktivieren und/oder die Steuerung kann dazu vorbereitet sein, den zweiten Energierückgewinnungsbegrenzungsmodus in Abhängigkeit von einer Drehzahlinformation, einer Drehmomentinformation, einer Frequenzinformation, einer Temperaturinformation, einer Leistungsinformation, einer Verlustleistungsinformation oder einem anderen Zustandsparameter zu aktivieren. Hierdurch kann die Aktivierung und gegebenenfalls eine Auswahl des Energierückgewinnungsbegrenzungsmodus an den Betriebszustand des Umrichters oder des Gesamtsystems angepasst werden. Eine Anpassung an einen Betriebszustand kann beispielsweise zweckmäßig sein, um plötzliche Drehmomentwechsel zu vermeiden, die für einen Fahrer schwer handhabbar sind oder für andere Verkehrsteilnehmer verkehrsgefährdend sein können. Unabhängig davon kann eine Anpassung an einen Betriebszustand zweckmäßig sein, um eine Überlastung von Fahrzeug- oder Systemkomponenten zu vermeiden. Zur Anpassung an einen Betriebszustand können Informationen genutzt werden, die von Sensoren direkt erfasst werden oder Informationen, die von Daten eines oder mehrerer Sensoren abgeleitet oder vorausberechnet werden.

Die Steuerung kann dazu vorbereitet sein, den ersten Energierückgewinnungsbegrenzungsmodus in Abhängigkeit von einer im Umrichter erzeugten Information und/oder in Abhängigkeit von einer dem Umrichter zugeführten externen Information zu aktivieren und/oder die Steuerung kann dazu vorbereitet sein, den zweiten Energierückgewinnungsbegrenzungsmodus in Abhängigkeit von einer im Umrichter erzeugten Information und/oder in Abhängigkeit von einer dem Umrichter zugeführten externen Information zu aktivieren. Mittels einer Einbeziehung von Daten von umrichterinternen Sensoren kann auf zuverlässige Weise eine ausreichende Verträglichkeit und Verfügbarkeit von Sensordaten erreicht werden. Mittels Einbeziehung von externen Informationen, die dem Umrichter von extern zugeführt werden, kann eine Aktivierung beziehungsweise Auswahl des Energierückgewinnungsbegrenzungsmodus erfolgen, die besonders vorausschauend ist und/oder eine verbesserte Anwendungsorientierung aufweist.

Die Steuerung ist dazu vorbereitet, den ersten und den zweiten Energierückgewinnungsbegrenzungsmodus abwechselnd zu aktivieren. Hierdurch kann eine Leistungsfähigkeit des Umrichters besser genutzt werden, indem die Verlustleistung in den leitend geschalteten Halbleiterschaltern auf eine größere Anzahl von Halbleiterschaltern verteilt wird.

Die Steuerung ist dazu vorbereitet, ein Zeitverhältnis eines Zeitanteils der Aktivierung des ersten Energierückgewinnungsbegrenzungsmodus zu einem Zeitanteil der Aktivierung des zweiten Energierückgewinnungsbegrenzungsmodus einzustellen, insbesondere in Abhängigkeit von einer Temperaturverteilung zwischen den Halbleiterschaltern und/oder in Abhängigkeit von einer Leistungsverteilung zwischen den Halbleiterschaltern einzustellen. Diese Maßnahme kann dazu beitragen, eine Leistungsfähigkeit des Umrichters (unter Berücksichtigung eines Sicherheitsabstands) auszuschöpfen, indem die Verlustleistung optimal zwischen den ersten und den zweiten Halbleiterschaltern verteilt wird.

Die Steuerung kann eine erste und eine zweite Teilsteuerung umfassen, wobei die erste Teilsteuerung einen ersten Plausibilitätsprüfer umfasst, der dazu vorbereitet ist, Ausgaben der zweiten Teilsteuerung auf Plausibilität zu prüfen und bei Erkennen einer Nichtplausibilität den ersten oder den zweiten Energierückgewinnungsbegrenzungsmodus einzuleiten. Durch Überführen des Umrichters in einen Energierückgewinnungsbegrenzungsmodus sobald die Ausgaben der zweiten Teilsteuerung als nicht plausibel erkannt werden, kann eine Wahrscheinlichkeit dafür erhöht werden, dass der Umrichter in einen sicheren Betriebsmodus wechselt, bevor die Steuerung den Umrichter in fehlerhafter Weise steuert.

Die zweite Teilsteuerung kann einen zweiten Plausibilitätsprüfer umfassen, der dazu vorbereitet ist, Ausgaben der ersten Teilsteuerung auf Plausibilität zu prüfen und bei Erkennen einer Nichtplausibilität den ersten oder den zweiten Energierückgewinnungsbegrenzungsmodus einzuleiten. Durch Überführung des Umrichters in einen Energierückgewinnungsbegrenzungsmodus sobald die Ausgaben der ersten Teilsteuerung als nicht plausibel erkannt werden, kann eine Wahrscheinlichkeit dafür noch weiter erhöht werden, dass der Umrichter in einen sicheren Betriebsmodus wechselt, bevor die Steuerung den Umrichter in fehlerhafter Weise steuert.

Die Erfindung wird nachfolgend anhand von Ausführungsbeispielen näher erläutert, die in den schematischen Zeichnungen dargestellt sind. Es zeigen:
- Fig. 1: ein schematisches Blockschaltbild eines Umrichters mit einer an dem Umrichter angeschlossenen elektrische Maschine;
- Fig. 2: ein schematisches Ersatzschaltbild für den Umrichter in einem ersten Energierückgewinnungsbegrenzungsmodus bei einer Unterbrechung des Pluszweigs der dritten Halbbrücke;
- Fig. 3: für eine Phase der elektrischen Maschine und einen Energierückgewinnungsbegrenzungsmodus ein schematisches Ersatzschaltbild eines Stromkreises der Phase;
- Fig. 4: ein schematisches Ersatzschaltbild für den Umrichter in einem zweiten Energierückgewinnungsbegrenzungsmodus bei einem Kurzschluss des Pluszweigs der dritten Halbleiterbrücke;
- Fig. 5: ein schematisches Ersatzschaltbild für den Umrichter in einem ersten Energierückgewinnungsbegrenzungsmodus bei einem Kurzschluss des Pluszweigs;
- Fig. 6: ein schematisches Zeitdiagramm, das für eine Ausführungsform des Umrichters zeigt, wie sich der erste und der zweite Energierückgewinnungsbegrenzungsmodus abwechseln; und
- Fig. 7: ein schematisches Ablaufdiagramm einer ersten Ausführungsform eines Verfahrens zum Betreiben eines Umrichters.

In den Figuren werden für entsprechende Komponenten jeweils dieselben Bezugszeichen verwendet. Bezugszeichenbezogene Erläuterungen gelten daher figurenübergreifend, sofern sich aus dem Zusammenhang nichts anderes ergibt. Aus Übersichtsgründen werden Bezugszeichen, die mit einer Bezeichnung der Phase u, v, w gekennzeichnet sind, auch ohne Phasenbezeichnung verwendet.

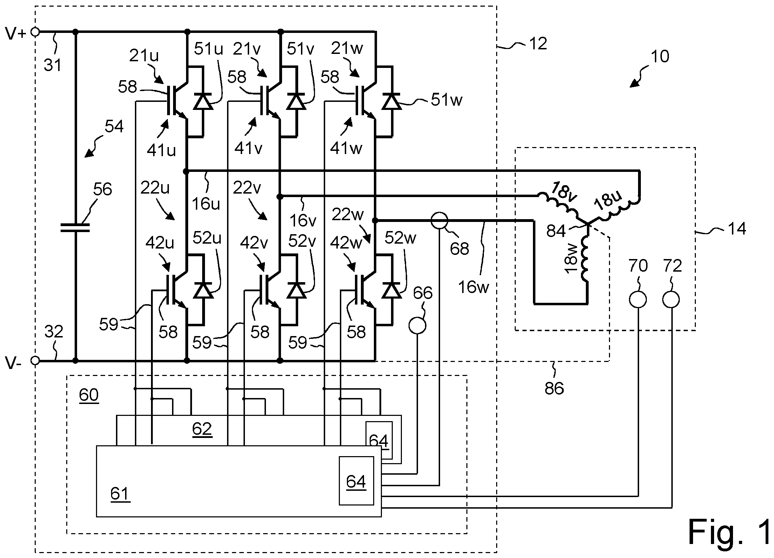

Das in Fig. 1 gezeigte System 10 umfasst einen Umrichter 12 und einen Elektromotor 14.

Der Elektromotor 14 ist mittels drei Phasenleitungen 16u, 16v, 16w an dem Umrichter 12 angeschlossen. Der Elektromotor 14 ist permanenterregt. Die (in den Figuren nicht dargestellten) Permanentmagnete des Elektromotors 14 sind typischerweise in einem (in den Figuren nicht dargestellten) Läufer des Elektromotors 14 befestigt, während die Wicklungen 18u, 18v, 18w des Elektromotors 14 in einem Stator des Elektromotors 14 angeordnet sind. In der Figur ist gezeigt, wie die Wicklungen 18 an den Phasenleitungen 16 in Sternschaltung geschaltet sind. Eine in den Figuren nicht dargestellte Alternative sieht vor, dass die Wicklungen 18 in Dreiecksschaltung an den Phasenleitungen 16 angeschlossen sind. Der Umrichter 12 umfasst je Phasenleitung 16 einen ersten Schaltkreis 21u, 21v, 21w zur zeitweisen Verbindung der Phasenleitung 16 mit einer Versorgungsleitung 31 mit einem positiven Spannungspotential V+. Außerdem umfasst der Umrichter 12 je Phasenleitung 16 einen zweiten Schaltkreis 22u, 22v, 22w zur zeitweisen Verbindung der Phasenleitung 16u, 16v, 16w mit einer Versorgungsleitung 32 mit einem negativen Spannungspotential V-. Jeder erste Schaltkreis 21 umfasst einen ersten Halbleiterschalter 41u, 41v, 41w und eine Freilaufdiode 51u, 51v, 51w. Jeder zweite Schaltkreis 22 umfasst einen zweiten Halbleiterschalter 42u, 42v, 42w und eine Freilaufdiode 52u, 52v, 52w. Die Versorgungsleitung 31 mit dem positiven Spannungspotential V+ und die Versorgungsleitung 32 mit dem negativen Spannungspotential V- können Teil eines Zwischenkreises 54 des Umrichters 12 sein. Zur Glättung von Spannungsschwankungen kann der Zwischenkreis 54 eine Zwischenkreiskapazität 56 umfassen.

Die Halbleiterschalter 41 (bzw. 42) sind typischerweise Thyristoren, IGBT oder Leistungs-MOSFET. Außerdem umfassen die Halbleiterschalter 41 (bzw. 42) jeweils eine Freilaufdiode 51 (bzw. 52), die zu einem Hauptstromkanal (beispielsweise Kollektor-Emitter-Strecke) des Halbleiterschalters 41 (bzw. 42) antiparallel geschaltet ist. Mit 'antiparallel' ist gemeint, dass die Durchlassrichtung der Freilaufdiode 51 (bzw. 52) in der Parallelschaltung entgegengesetzt zu einer Hauptdurchlassrichtung des Halbleiterschalters 41 (bzw. 42) orientiert ist. Wenn der Halbleiterschalter 41 (bzw. 42) ein MOSFET ist, kann die Freilaufdiode 51 (bzw. 52) im einfachsten Fall nur aus der Body-Diode des MOSFET 41 (bzw. 42) bestehen.

Zur Verringerung von Sicherheitsrisiken sieht eine Weiterbildung vor, dass eine Steuerung 60 des Umrichters 12 eine erste 61 und eine zweite 62 Teilsteuerung umfasst. Jedes Gate 58 beziehungsweise jeder Basisanschluss der ersten 41 und der zweiten 42 Halbleiterschalter ist dann über eine Steuerleitung 59 sowohl mit einer ersten Teilsteuerung 61 wie auch mit einer zweiten Teilsteuerung 62 des Umrichters 12 verbunden. Jede der beiden Teilsteuerungen 61, 62 umfasst einen Plausibilitätsprüfer 64. Die Figur zeigt auch, dass die erste Teilsteuerung 61 mit einem internen Temperatursensor 66 verbunden ist, um eine Temperaturinformation aus dem Bereich mindestens eines der Halbleiterschalter 41, 42 zu erhalten. Außerdem ist die erste Teilsteuerung 61 mit einem internen Frequenzsensor 68 verbunden, um eine Frequenzinformation von mindestens einer der Phasenleitungen 16 zu erhalten. Darüberhinaus ist die erste Teilsteuerung 61 mit einem externen Temperatursensor 70 verbunden, um eine Temperaturinformation aus dem Bereich mindestens einer der Wicklungen 18 des Elektromotors 14 zu erhalten. Des Weiteren ist die erste Teilsteuerung 61 mit einem externen Drehzahlensensor 72 verbunden, um eine Drehzahlinformation aus dem Elektromotor 14 zu erhalten. Aus Übersichtsgründen ist in der Figur nicht explizit dargestellt, dass die zweite Teilsteuerung 62 gleiche Informationen von denselben 66, 68, 70, 72 oder weiteren Sensoren bezieht.

Die ersten Schaltkreise 21 sind so angeordnet, dass der Strom von dem positiven Versorgungsspannungsanschluss 31 in Hauptdurchlassrichtung des ersten Halbleiterschalters 41 durch den ersten Halbleiterschalter 41 zur Phasenleitung 16 in die zugehörige Wicklung 18 des Elektromotors 14 fließt, wenn der erste Halbleiterschalter 41 leitend geschaltet ist. Die zweiten Schaltkreise 22 sind so angeordnet, dass der Strom von einer Wicklung 18 des Elektromotors 14 durch die zugehörige Phasenleitung 16 und dann in Durchlassrichtung des zweiten Halbleiterschalters 22 durch den zweiten Halbleiterschalter 22 fließt, wenn der zweite Halbleiterschalter 22 leitend geschaltet ist. Mittels (in den Figuren nicht dargestellten) Totzeiten zwischen Zeiten (während der der erste Halbleiterschalter 41 leitend geschaltet ist) und direkt benachbarten Zeiten (während der der zweite Halbleiterschalter 42 derselben Phasenleitung leitend geschaltet ist), wird (zumindest im Normalbetrieb) sichergestellt, dass zu keinem Zeitpunkt beide Halbleiterschalter 41, 42 derselben Phasenleitung 16 gleichzeitig durchgeschaltet sind.

Wenn der Umrichter 12 aufgrund eines Fehlers im Umrichter 12 oder aufgrund einer Betriebsstörung außer Betrieb genommen wird, während sich der (in den Figuren nicht dargestellte) Läufer des Elektromotors 14 dreht, wirkt der Elektromotor 14 wie ein Elektrogenerator. Dabei induziert ein rotierendes Magnetfeld (Drehfeld) eine Spannung (elektromotorische Kraft) in den Wicklungen 18 des Elektromotors 14. Das Drehfeld wird in dem Elektromotor 14 von (mit dem Läufer mitrotierenden) Permanentmagneten erzeugt. Wenn aufgrund einer Außerbetriebnahme des Umrichters 12 alle ersten 41 und zweiten 42 Halbleiterschalter sperrend geschaltet sind, sind nur noch die Freilaufdioden 51, 52 in ihrer Hauptdurchlassrichtung leitend. Aufgrund der Orientierung der Freilaufdioden führt dies auf der Spannungsversorgungsseite bzw. dem Zwischenkreis 54 zwar nicht zu einer Verpolung, kann aber zu folgenden anderen Schwierigkeiten führen. Zum einen kann (beispielsweise bei schneller Talfahrt) von dem Drehfeld eine Spannung in den Wicklungen 18u, 18v, 18w induziert werden, die höher ist als eine Spannungsfestigkeit der Zwischenkreiskapazität 56. Zum anderen impliziert das Aufladen der Zwischenkreiskapazität 56 (bis zur Grenze ihrer Spannungsfestigkeit) mit elektrischer Energie die Entstehung eines Drehmoments, das dem Energiefluss (Bremsleistung mittels Energierückgewinnung) geteilt durch die Drehzahl f entspricht. Wenn auf diese Weise ein Umrichter 12 außer Betrieb genommen wird, an dem ein Elektromotor 14 angeschlossen ist, der mit einer rotierenden Antriebsachse eines Fahrzeugs angetrieben wird, kann sich aufgrund einer plötzlichen Änderung des Drehmoments eine Schubkraft des Fahrzeugs zu schnell zu stark und somit in verkehrsgefährdender Weise verändern.

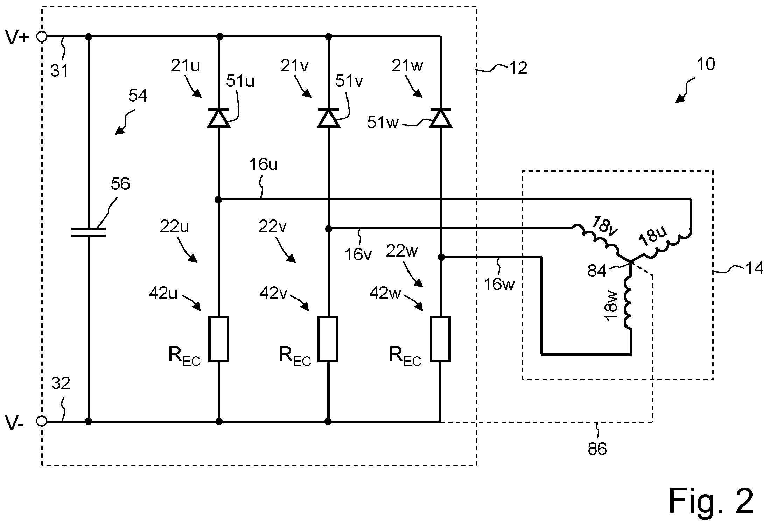

Die Fig. 2 zeigt ein Ersatzschaltbild für den Umrichter 12 mit angeschlossenem Elektromotor 14, der einem ersten Energierückgewinnungsbegrenzungsmodus EBM1 entspricht, den die Steuerung 60 bei einer Unterbrechung des Pluszweigs 21w der dritten Halbbrücke 21w, 22w einstellt. Hierbei sind, abgesehen von dem defekten Halbleiterschalter 41w, alle anderen ersten Halbleiterschalter 41u, 41v sperrend geschaltet und alle zweiten Halbleiterschalter 42 leitend geschaltet. Die zweiten Halbleiterschalter 42 haben dann einen niedrigen Durchlasswiderstand R_{EC}. Zur Vereinfachung wird in dem Ersatzschaltbild unterstellt, dass in diesem Betriebszustand das Vorhandensein der Freilaufdioden 52 (die den zweiten Halbleiterschaltern 42 antiparallel geschaltet sind) in erster Näherung vernachlässigt werden kann. Unter der Annahme, dass die Anordnung (bezogen auf das Drehfeld) drehsymmetrisch (radiärsymmetrisch) ist, ist das Ersatzschaltbild mit einem Ersatzschaltbild gleichwertig, in dem der Sternpunkt 84 der elektrischen Maschine 14 auf demselben Spannungspotential liegt wie die negative Versorgungsleitung 31. An diesen Sachverhalt erinnert in der Figur die gestrichelte Linie 86.

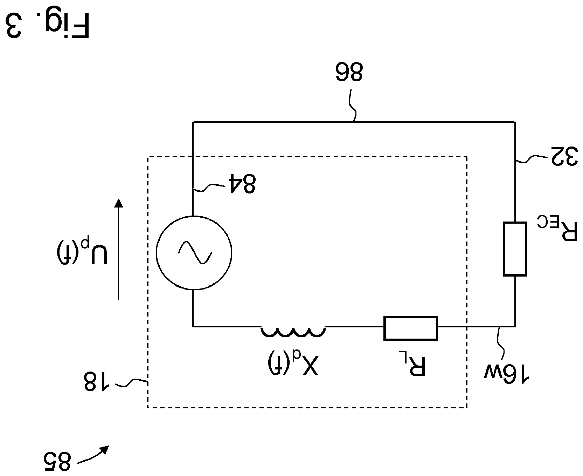

Die Fig. 3 zeigt ein Ersatzschaltbild des Stromkreises 85 für eine Phase u, v oder w in dem ersten Energierückgewinnungsbegrenzungsmodus EBM1. Der Stromkreis 85 umfasst im Wesentlichen eine Spannungsquelle U_{P}(f), eine Synchronreaktanz X_{d}(f), einen ohmschen Wicklungswiderstand R_{L} und einen Durchlasswiderstand R_{EC} des Halbleiterschalters 41 bzw. 42. Die Spannungsquelle U_{P}(f) hat eine Leerlaufspannung, deren Wechselspannung Uₚ(f) der elektromotorischen Kraft (EMK) der Wicklung 18u, 18v, 18w entspricht. Wie eingangs begründet wurde, ist die Synchronreaktanz X_{d}(f) der elektrischen Maschine 14 über einen weiten Drehzahlbereich in etwa proportional zur Drehzahl f. Solange die Drehzahl f nicht sehr niedrig ist, ist das Drehmoment M_{R} (Rekuperationsdrehmoment), das in diesem ersten Energierückgewinnungsbegrenzungsmodus EBM2 des Umrichters 12 auftritt, aus eingangs dargestellten Gründen wesentlich niedriger und somit wesentlich weniger sicherheitskritisch, als wenn alle noch funktionsfähigen Halbleiterschalter 41u, 41v, 42 sperrend geschaltet wären.

Um eine ausreichende Schwächung des Drehmoments M_{R} zu erzielen, wird hierbei unterstellt, dass die Summe des ohmschen Widerstands R_{EC} und des Wicklungswiderstands R_{L} erheblich kleiner ist als die Synchronreaktanz X_{d}(f). Vorzugsweise beträgt ein Verhältnis r = X_{d}(f)/(R_{L}+R_{EC}) zwischen der Synchronreaktanz X_{d}(f) und der Summe des ohmschen Widerstands R_{EC} und des Wicklungswiderstands R_{L} im ersten EBM1 und/oder im zweiten EBM2 Energierückgewinnungsbegrenzungsmodus mindestens 5, insbesondere bevorzugt mindestens 10 oder 20, ganz besonders bevorzugt mindestens 50 oder 100. Gleiche Überlegungen gelten für den zweiten Energierückgewinnungsbegrenzungsmodus EBM2. Im Ersatzschaltbild erinnert die Notation (f) daran, dass sowohl die Synchronreaktanz X_{d}(f) als auch die elektromotorische Kraft Uₚ(f) drehzahlabhängig sind.

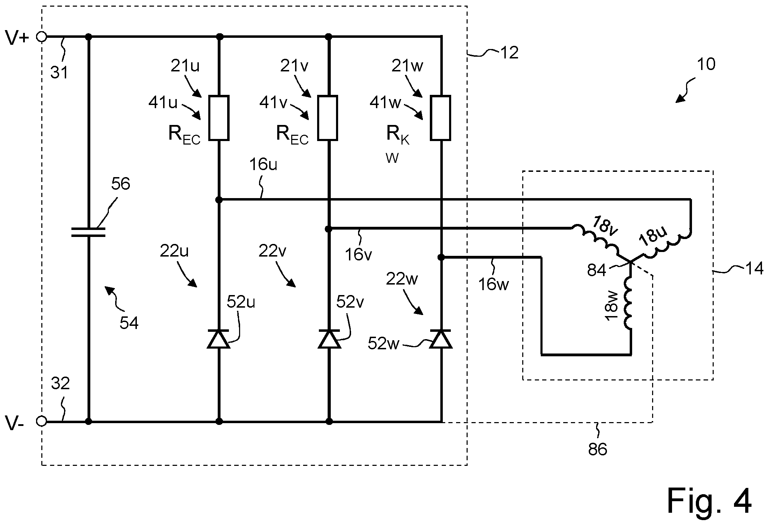

Die Fig. 4 zeigt ein Ersatzschaltbild für den Umrichter 12 mit angeschlossenem Elektromotor 14, der einem zweiten Energierückgewinnungsbegrenzungsmodus EBM2 entspricht, den die Steuerung 60 bei einem Kurzschluss des Pluszweigs 21w der dritten Halbbrücke 21w, 22w einstellt. Hierbei sind, abgesehen von dem defekten, leitenden ersten Halbleiterschalter 41w, alle anderen ersten Halbleiterschalter 41u, 41v leitend geschaltet und alle zweiten Halbleiterschalter 42 sperrend geschaltet. Die ersten Halbleiterschalter 41 haben einen niedrigen Durchlasswiderstand R_{EC} bzw. R_{KW}. Zur Vereinfachung wird in dem Ersatzschaltbild unterstellt, dass in diesem Betriebszustand das Vorhandensein der Freilaufdioden 51 (die den ersten Halbleiterschaltern 41 antiparallel geschaltet sind) in erster Näherung vernachlässigt werden kann.

Unter der Annahme, dass die Anordnung (bezogen auf das Drehfeld) drehsymmetrisch (radiärsymmetrisch) ist, ist das Ersatzschaltbild mit einem Ersatzschaltbild gleichwertig, in dem der Sternpunkt 84 auf demselben Spannungspotential wie die negative Versorgungsleitung 32 liegt. An diesen Sachverhalt erinnert in der Figur die gestrichelte Linie 86. Das Ersatzschaltbild des Stromkreises 85 einer jeden Phase u, v, w umfasst dann im Wesentlichen eine Spannungsquelle, deren Wechselspannung Uₚ der elektromotorischen Kraft (EMK) entspricht, sowie den ohmschen Wicklungswiderstand R_{L} der Wicklung 18u, 18v, 18w der Phase u, v, w sowie einen ohmschen Widerstand R_{EC}, der dem Durchlasswiderstand des Halbleiterschalters 41 entspricht. Solange die Drehzahl f nicht sehr niedrig ist, ist das Drehmoment M_{R} (Rekuperationsdrehmoment), das in diesem ersten Energierückgewinnungsbegrenzungsmodus EBM1 des Umrichters 12 auftritt, wesentlich niedriger und somit wesentlich weniger sicherheitskritisch, als wenn alle noch funktionsfähigen Halbleiterschalter 41u, 41v, 42 sperrend geschaltet sind.

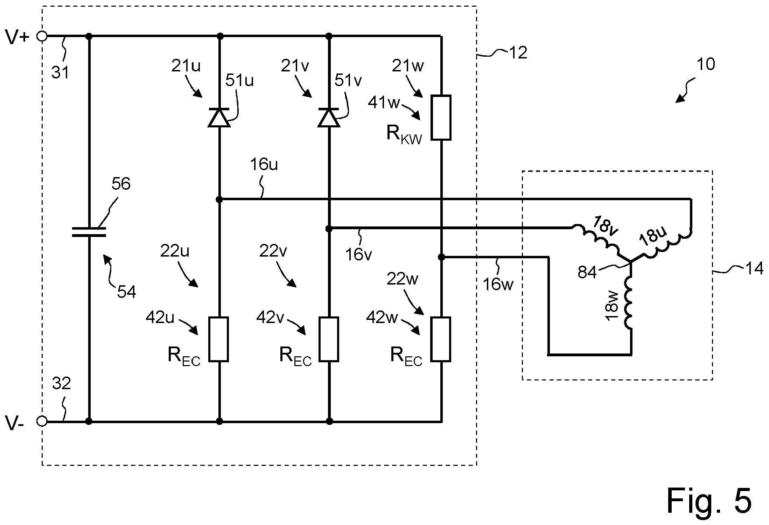

Die Fig. 5 zeigt die Anordnung in einem zweiten Energierückgewinnungsbegrenzungsmodus EBM2, den die Steuerung 60 bei einem Kurzschluss des Pluszweigs 21w der dritten Halbbrücke 21w, 22w wahlweise ebenfalls (aber nicht gleichzeitig mit dem ersten Energierückgewinnungsbegrenzungsmodus EBM1) einstellen kann. Hierbei sind außer dem defekten ersten Halbleiterschalter 41w alle ersten Halbleiterschalter 41u, 41v sperrend geschaltet und alle zweiten Halbleiterschalter 42 leitend geschaltet. Die zweiten Halbleiterschalter 42 haben einen niedrigen Durchlasswiderstand R_{EC}. Zur Vereinfachung wird in dem Ersatzschaltbild unterstellt, dass das Vorhandensein der Freilaufdioden 52 (die den zweiten Halbleiterschaltern 42 antiparallel geschaltet sind) in diesem Betriebszustand in erster Näherung vernachlässigt werden kann. Solange die Drehzahl f nicht sehr niedrig ist, gilt auch hier, dass das Drehmoment M_{R} (Rekuperationsdrehmoment), das in diesem zweiten Energierückgewinnungsbegrenzungsmodus EBM2 des Umrichters 12 auftritt, wesentlich niedriger und somit wesentlich weniger sicherheitskritisch ist, als wenn alle noch funktionsfähigen Halbleiterschalter 41u, 41v, 42 sperrend geschaltet sind.

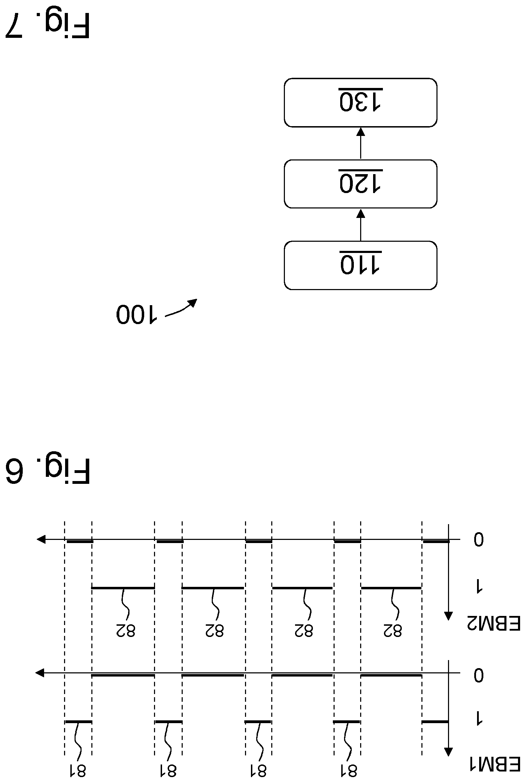

Die Fig. 6 zeigt ein schematisches Zeitdiagramm, das für eine Ausführungsform des Umrichters 12 darstellt, wie sich bei einem Kurzschluss des Pluszweigs 21w der dritten Halbbrücke 21w, 22w der erste EBM1 und der zweite EBM2 Energierückgewinnungsbegrenzungsmodus zeitlich abwechseln. Eine Weiterbildung sieht vor, dass mittels der Steuerung 60 ein Zeitverhältnis 81/82 eines Zeitanteils 81 der Aktivierung des ersten Energierückgewinnungsbegrenzungsmodus EBM1 zu einem Zeitanteil 82 der Aktivierung des zweiten Energierückgewinnungsbegrenzungsmodus EBM2 einstellbar ist. Das Zeitverhältnis 81/82 kann in Abhängigkeit von einer Temperaturverteilung zwischen den Halbleiterschaltern 41, 42 und/oder in Abhängigkeit von einer Leistungsverteilung zwischen den Halbleiterschaltern 41, 42 einstellbar sein. Mittels (in den Figuren nicht dargestellten) Totzeiten zwischen Zeiten 81 (während der der erste Halbleiterschalter 41 leitend geschaltet ist) und direkt benachbarten Zeiten 82 (während der der zweite Halbleiterschalter 42 derselben Phasenleitung leitend geschaltet ist), wird (zumindest im Normalbetrieb) sichergestellt, dass zu keinem Zeitpunkt beide Halbleiterschalter 41, 42 derselben Phasenleitung 16 gleichzeitig durchgeschaltet sind.

Alternativ oder in Kombination zu dem in der Fig. 6 dargestellten Konzept sieht eine Weiterbildung vor, dass die Steuerung 60 den ersten EBM1 und/oder den zweiten EBM2 Energierückgewinnungsbegrenzungsmodus periodisch deaktiviert und aktiviert, um auf diese Weise einen mittleren Drehmomentwert zu erzielen. Dies kann beispielsweise von Vorteil sein, wenn eine Fehlfunktion des Umrichters 12 auftritt, während sich der Elektromotor 14 aufgrund einer Nutzbremsung bereits in einem Rekuperationsbetrieb befindet und eine Bremswirkung (mittleres Drehmoment) im Energierückgewinnungsbegrenzungsmodus (sozusagen "nahtlos") an das Drehmoment der zuletzt durchgeführten Nutzbremsung angepasst werden soll.

Das in Fig. 7 gezeigte Verfahren 100 zum Betreiben eines Umrichters 12 umfasst folgende Schritte 110, 120, 130. In einem ersten Schritt 110 wird ein Umrichter 12 gemäß einer der zuvor beschriebenen Ausführungsformen bereitgestellt. In einem zweiten Schritt 120 überwacht eine Funktion des Umrichters 12 zur Erkennung einer Fehlfunktion des Umrichters 12 (beispielsweise ein Plausibilitätsprüfer 64), ob in dem Umrichter 12 eine Fehlfunktion vorliegt. In einem dritten Schritt 130 wird, wenn eine Fehlfunktion des Umrichters 12 erkannt wurde, der Umrichter 12 in einem ersten Energierückgewinnungsbegrenzungsmodus EBM1 betrieben, in dem zumindest zeitweise mindestens zwei 41u, 41v der ersten Halbleiterschalter 41 gleichzeitig leitend geschaltet sind. Vorzugsweise werden auf diese Weise in dem ersten Energierückgewinnungsbegrenzungsmodus EBM1 alle Phasenleitungen 16 kurzgeschlossen.

Um Sicherheitsrisiken bei Ausfall einer Komponente der Steuerung 60 oder ihrer Stromversorgung zu verringern, sieht eine Weiterbildung vor, dass der Umrichter 12 dazu vorbereitet ist, den ersten EBM1 oder den zweiten EBM2 Energierückgewinnungsbegrenzungsmodus einzunehmen, wenn mindestens eine Steuerung 60 des Umrichters 12 inaktiv ist, insbesondere wenn mindestens zwei Steuerungen 61, 62 des Umrichters 12 inaktiv sind. Diese Funktionalität des Umrichters 12 kann als 'passiver Kurzschluss der Phasenleitungen 16' bezeichnet werden.

Die erste Teilsteuerung 61 kann einen ersten Plausibilitätsprüfer 64 umfassen, der dazu vorbereitet ist, Ausgaben der zweiten Teilsteuerung 62 auf Plausibilität zu prüfen und bei Erkennen einer Nichtplausibilität den ersten EBM1 oder den zweiten EBM2 Energierückgewinnungsbegrenzungsmodus einzuleiten. Diese Funktionalität des Umrichters 12 kann als 'aktiver Kurzschluss der Phasenleitungen 16' bezeichnet werden. Darüberhinaus kann die zweite Teilsteuerung 62 einen zweiten Plausibilitätsprüfer 64 umfassen, der dazu vorbereitet ist, Ausgaben der ersten Teilsteuerung 61 auf Plausibilität zu prüfen und bei Erkennen einer Nichtplausibilität den ersten EBM1 oder den zweiten EBM2 Energierückgewinnungsbegrenzungsmodus einzuleiten.

Dieselben Schaltungsprinzipien können auch mit umgekehrter Polung angewendet werden. Analoge und/oder digitale elektrische Signale, die in den Ausführungsbeispielen in Gestalt von Spannungen dargestellt sind, können alternativ oder zusätzlich auch als (eingeprägte) Ströme dargestellt werden. Mittels Verstärkern oder Wandlern können in der Beschreibung erwähnte Spannungen oder Ströme auf dem Weg von ihrer jeweiligen Quelle zu ihrer jeweiligen Senke umskaliert werden. Analoge oder digitale Signale, die in Gestalt von Spannungen oder Strömen dargestellt sind, können nach einem bekannten oder nach einem heute noch nicht bekannten Verfahren linear oder nichtlinear codiert sein. Beispiele für anwendbare Codierungsverfahren sind Pulsweitenmodulation und Pulscodemodulation. Die analogen und/oder digitalen Signale können elektrisch, optisch oder per Funk übertragen werden. Die analogen und/oder digitalen Signale können im Raummultiplex (also mittels unterschiedlicher Leitungen), im Zeitmultiplex oder im Codemultiplex übertragen werden. Die Übertragung der analogen und digitalen Signale kann über ein oder mehrere Bussysteme erfolgen.

### Bezugszeichen:

- 10: System
- 12: Umrichter
- 14: Elektromotor; elektrische Maschine
- 16: Phasenleitung
- 18: Wicklung
- 21: erster Schaltkreis
- 22: zweiter Schaltkreis
- 31: erste Versorgungsleitung
- 32: zweite Versorgungsleitung
- 41: erster Halbleiterschalter
- 42: zweiter Halbleiterschalter
- 51: Freilaufdiode im ersten Schaltkreis
- 52: Freilaufdiode im zweiten Schaltkreis
- 54: Zwischenkreis
- 56: Zwischenkreiskapazität
- 58: Gate des Halbleiterschalters
- 59: Steuerleitung
- 60: Steuerung
- 61: erste Teilsteuerung
- 62: zweite Teilsteuerung
- 64: Plausibilitätsprüfer
- 66: interner Temperatursensor
- 68: interner Frequenzsensor
- 70: externer Temperatursensor
- 72: externer Drehzahlsensor
- 81: Zeiten, während der der erste Halbleiterschalter 41 leitend geschaltet wird
- 82: Zeiten, während der der zweite Halbleiterschalter 42 leitend geschaltet wird
- 84: Sternpunkt
- 85: Ersatzstromkreis für eine Phase im Energierückgewinnungsbegrenzungsmodus
- 86: gestrichelte Linie
- 100: Verfahren zum Betreiben des Umrichters
- 110: Bereitstellung des Umrichters
- 120: Überwachung einer Funktion des Umrichters
- 130: Betreiben in einem Energierückgewinnungsbegrenzungsmodus
- EBM1: erster Energierückgewinnungsbegrenzungsmodus
- EBM2: zweiter Energierückgewinnungsbegrenzungsmodus
- f: Drehzahl
- M_{R}: Rekuperationsdrehmoment
- R_{EC}: Widerstand eines leitend geschalteten Halbleiterschalters
- R_{KW}: Kurzschlusswiderstand eines defekten Halbleiterschalters
- R_{L}: ohmscher Wicklungswiderstand
- u: erste Phase
- v: zweite Phase
- w: dritte Phase
- Uₚ: Polradspannung; elektromotorische Kraft (EMK)
- X_{d}: Synchronreaktanz

## Patentansprüche

1. Steuerung (60) für einen Umrichter (12) für eine elektrische Maschine (14), wobei der Umrichter (12) mehrere Phasenleitungen (16) zum Anschluss der elektrischen Maschine (14) umfasst, wobei der Umrichter (12) je Phasenleitung (16) eine Halbbrücke (21, 22) mit je einem ersten (41) und je einem zweiten (42) Halbleiterschalter aufweist, wobei der erste Halbleiterschalter (41) dazu vorbereitet ist, zumindest eine der Phasenleitungen (16) zeitweise mit einer ersten Versorgungsleitung (31) des Umrichters (14) elektrisch zu verbinden und der zweite Halbleiterschalter (42) dazu vorbereitet ist, die Phasenleitung (16) zeitweise mit einer zweiten Versorgungsleitung (32) des Umrichters (14) elektrisch zu verbinden, wobei der Umrichter (12) dazu vorbereitet ist, zeitweise in einem ersten Energierückgewinnungsbegrenzungsmodus (EBM2) betrieben zu werden, in dem zumindest zeitweise mindestens zwei der ersten Halbleiterschalter (41) gleichzeitig leitend geschaltet sind, wobei der Umrichter (12) dazu vorbereitet ist, zumindest zeitweise in dem ersten Energierückgewinnungsbegrenzungsmodus (EBM2) mit gesperrt geschalteten zweiten Halbleiterschaltern (42) betrieben zu werden, wobei der Umrichter (12) dazu vorbereitet ist, zumindest zeitweise in einem zweiten Energierückgewinnungsbegrenzungsmodus (EBM1) betrieben zu werden, in dem zumindest zeitweise mindestens zwei der zweiten Halbleiterschalter (42) gleichzeitig leitend geschaltet sind, wobei der Umrichter (12) dazu vorbereitet ist, zumindest zeitweise in dem zweiten Energierückgewinnungsbegrenzungsmodus (EBM1) mit gesperrt geschalteten ersten Halbleiterschaltern (41) betrieben zu werden,
wobei die Steuerung (61) dazu vorbereitet ist, bei einer Fehlfunktion des Umrichters (12) den ersten (EBM2) oder den zweiten (EBM1) Energierückgewinnungsbegrenzungsmodus einzuleiten, **dadurch gekennzeichnet, dass** die Steuerung (60) dazu vorbereitet ist, den ersten und den zweiten Energierückgewinnungsbegrenzungsmodus abwechselnd zu aktivieren, wobei die Steuerung (60) dazu vorbereitet ist, ein Zeitverhältnis (81/82) eines Zeitanteils (81) der Aktivierung des ersten Energierückgewinnungsbegrenzungsmodus zu einem Zeitanteil (82) der Aktivierung des zweiten Energierückgewinnungsbegrenzungsmodus einzustellen.

2. Steuerung (60) nach Anspruch 1, **dadurch gekennzeichnet, dass** die Steuerung (60) dazu vorbereitet ist, ein Zeitverhältnis (81/82) eines Zeitanteils (81) der Aktivierung des ersten Energierückgewinnungsbegrenzungsmodus zu einem Zeitanteil (82) der Aktivierung des zweiten Energierückgewinnungsbegrenzungsmodus in Abhängigkeit von einer Temperaturverteilung zwischen den Halbleiterschaltern (41, 42) und/oder in Abhängigkeit von einer Leistungsverteilung zwischen den Halbleiterschaltern (41, 42) einzustellen.

## Claims

1. Controller (60) for a converter (12) for an electrical machine (14), wherein the converter (12) comprises a plurality of phase lines (16) for connecting the electrical machine (14), wherein for each phase line (16) for the converter (12) has a half-bridge (21, 22) with one first (41) and one second (42) semiconductor switch, wherein the first semiconductor switch (41) is prepared to electrically connect at least one of the phase lines (16) intermittently to a first supply line (31) of the converter (14), and the second semiconductor switch (42) is prepared to electrically connect the phase line (16) intermittently to a second supply line (32) of the converter (14), wherein the converter (12) is prepared to be operated intermittently in a first energy recovery limiting mode (EBM2), in which at least two of the first semiconductor switches (41) are at least intermittently on at the same time, wherein the converter (12) is prepared to be operated at least intermittently in the first energy recovery limiting mode (EBM2) with second semiconductor switches (42) off, wherein the converter (12) is prepared to be operated at least intermittently in a second energy recovery limiting mode (EBM1), in which at least two of the second semiconductor switches (42) are at least intermittently on at the same time, wherein the converter (12) is prepared to be operated at least intermittently in the second energy recovery limiting mode (EBM1) with first semiconductor switches (41) off, wherein the controller (61) is prepared to initiate the first (EBM2) or the second (EBM1) energy recovery limiting mode in the event of a malfunction in the converter (12), **characterized in that** the controller (60) is prepared to activate the first and the second energy recovery limiting mode alternately, the controller (60) is prepared to adjust a time ratio (81, 82) for a time component (81) of the activation of the first energy recovery limiting mode to a time component (82) of the activation of the second energy recovery limiting mode.

2. Controller (60) according to Claim 1, **characterized in that** the controller (60) is prepared to adjust a time ratio (81, 82) for a time component (81) of the activation of the first energy recovery limiting mode to a time component (82) of the activation of the second energy recovery limiting mode, on the basis of a temperature distribution between the semiconductor switches (41, 42) and/or on the basis of a power distribution between the semiconductor switches (41, 42).

## Revendications

1. Commande (60) d'un convertisseur (12) pour une machine électrique (14), dans laquelle le convertisseur (12) comprend une pluralité de lignes de phase (16) servant à raccorder la machine électrique (14), dans laquelle le convertisseur (12) comporte un demi-pont (21, 22) pour chaque ligne de phase (16) respectivement muni d'un premier (41) et d'un second (42) commutateur à semi-conducteur, dans laquelle le premier commutateur à semi-conducteur (41) est configuré pour relier électriquement de manière temporaire au moins l'une des lignes de phase (16) à une première ligne d'alimentation (31) du convertisseur (14) et le second commutateur à semi-conducteur (42) est configuré pour relier électriquement de manière temporaire la ligne de phase (16) à une seconde ligne d'alimentation (32) du convertisseur (14), dans laquelle le convertisseur (12) est configuré pour être utilisé temporairement dans un premier mode de limitation de récupération d'énergie (EBM2) dans lequel au moins deux des premiers commutateurs à semi-conducteur (41) sont simultanément commutés au moins temporairement à l'état conducteur, dans laquelle le convertisseur (12) est configuré pour être utilisé au moins temporairement dans le premier mode de limitation de récupération d'énergie (EBM2) à l'aide de seconds commutateurs à semi-conducteur (42) commutés à l'état non conducteur, dans laquelle le convertisseur (12) est configuré pour être utilisé au moins temporairement dans un second mode de limitation de récupération d'énergie (EBM1) dans lequel au moins deux des seconds commutateurs à semi-conducteur (42) sont simultanément commutés au moins temporairement à l'état conducteur, dans laquelle le convertisseur (12) est configuré pour être utilisé au moins temporairement dans le second mode de limitation de récupération d'énergie (EBM1) à l'aide de premiers commutateurs à semi-conducteurs (41) commutés à l'état non conducteur, dans laquelle la commande (61) est configurée pour déclencher le premier (EBM2) ou le second (EBM1) mode de limitation de récupération d'énergie en cas de dysfonctionnement du convertisseur (12),
**caractérisée en ce que** la commande (60) est configurée pour activer alternativement les premier et second modes de limitation de récupération d'énergie,
dans laquelle la commande (60) est configurée pour régler un rapport cyclique (81/82) d'une fraction de temps (81) d'activation du premier mode de limitation de récupération d'énergie par rapport à une fraction de temps (82) d'activation du second mode de limitation de récupération d'énergie.

2. Commande (60) selon la revendication 1, **caractérisée en ce que** la commande (60) est configurée pour établir un rapport cyclique (81/82) d'une fraction de temps (81) d'activation du premier mode de limitation de récupération d'énergie par rapport à une fraction de temps (82) d'activation du second mode de limitation de récupération d'énergie en fonction de la répartition de température entre les commutateurs à semi-conducteur (41, 42) et/ou en fonction d'une répartition de puissance entre les commutateurs à semi-conducteur (41, 42).
